# EUROPÄISCHE PATENTSCHRIFT

(11) **EP 3 645 348 B1**
(45) Veröffentlichungstag und Bekanntmachung des Hinweises auf die Patenterteilung: **04.01.2023**
(21) Anmeldenummer: 18735547.4
(22) Anmeldetag: 27.06.2018
(51) Int. Cl.: B60S 1/38, C08J 7/04, C08J 7/06, C08J 7/046

(54) **SCHEIBENWISCHER-WISCHGUMMI MIT OPTIMIERTER BESCHICHTUNGSSCHICHTDICKE**
WIPER RUBBER WITH OPTIMIZED COATING LAYER THICKNESS
CAOUTCHOUC D'ESSUIE-GLACE DOTÉ D'UNE ÉPAISSEUR DE REVÊTEMENT OPTIMISÉE

(30) Priorität: 28.06.2017 DE 102017210906
(43) Veröffentlichungstag der Anmeldung: 06.05.2020
(73) Patentinhaber: Robert Bosch GmbH, 70442 Stuttgart (DE)
(72) Erfinder: GOTZEN, Nicolaas, 3070 Kortenberg (BE); STASSEN, Peter, 3631 Uikhoven (BE); CARLIER, Valerie, 5340 Gesves (BE)
(86) Internationale Anmeldenummer: PCT/EP2018/067181
(87) Internationale Veröffentlichungsnummer: WO 2019/002335

(56) Entgegenhaltungen:
- EP-A1- 2 130 857
- EP-A1- 3 075 802
- DE-A1- 10 132 026
- DE-A1-102008 002 249
- US-A1- 2010 234 489

## Beschreibung

Die vorliegende Erfindung betrifft ein Wischgummi für ein Wischblatt eines Scheibenwischers sowie ein entsprechendes Wischblatt.

### Stand der Technik

Wischgummis für Wischblätter von Scheibenwischern, beispielsweise von Fahrzeugen, umfassen üblicherweise einen Wischgummigrundkörper. Dieser Wischgummigrundkörper kann mit einer Beschichtung beschichtet sein, welche Partikel zur Reibungsreduzierung, zum Beispiel Graphit- und/oder Kunststoffpartikel, umfasst.

Aus der US 2010/234489 A1 ist ein Wischgummi für ein Wischblatt eines Scheibenwischers bekannt, das einen Wischgummikörper umfasst, wobei der Wischgummigrundkörper mit einer Beschichtung beschichtet ist, wobei die Beschichtung Partikel, insbesondere zur Reibungsreduzierung, umfasst, wobei die Beschichtung eine durchschnittliche Schichtdicke in einem Bereich von > 2 µm bis < 10 µm aufweist.

### Offenbarung der Erfindung

Gegenstand der vorliegenden Erfindung ist ein Wischgummi für ein Wischblatt eines Scheibenwischers, insbesondere eines Fahrzeugs, beispielsweise eines Kraftfahrzeugs. Dabei umfasst das Wischgummi einen Wischgummigrundkörper, welcher mit einer, insbesondere reibungsreduzierenden, Beschichtung beschichtet ist. Die Beschichtung umfasst dabei Partikel, insbesondere zur Reibungsreduzierung.

Die Beschichtung weist dabei eine durchschnittliche Schichtdicke in einem Bereich von > 2 µm bis < 10 µm auf.

Umfangreiche experimentelle Untersuchungen haben ergeben, dass für eine optimale Funktion des Wischgummis, insbesondere im Hinblick auf eine gute anfängliche Wischqualität in Kombination mit möglichst wenig Wischgeräuschen, wie Quietschen, Schmatzen und/oder Brummen beim Wischvorgang, überraschenderweise die durchschnittliche Schichtdicke der Beschichtung maßgeblich ist. Die Untersuchungen haben gezeigt, dass durch eine Beschichtung mit einer durchschnittlichen Schichtdicke in einem Bereich von > 2 µm bis < 10 µm Funktionseigenschaften des Wischgummis, insbesondere die anfängliche Wischqualität in Kombination mit möglichst wenig Wischgeräuschen, wie Quietschen, Schmatzen und/oder Brummen beim Wischvorgang, optimiert werden können. Die Zusammensetzung des Wischgummigrundkörpers und der Beschichtung, beispielsweise die verwendeten Partikel und/oder der verwendete Binder, scheinen dabei lediglich einen geringeren Effekt auf die Funktionseigenschaften des Wischgummis zu haben, als die durchschnittliche Schichtdicke der Beschichtung als solche.

Gegebenenfalls kann die Beschichtung eine durchschnittliche Schichtdicke in einem Bereich von ≥ 3 µm bis ≤ 9 µm, beispielsweise ≥ 4 µm bis ≤ 8 µm, zum Beispiel ≥ 5 µm bis ≤ 7 µm, aufweisen. In diesen Bereichen scheint das Optimum für die Funktionseigenschaften des Wischgummis, insbesondere die anfängliche Wischqualität in Kombination mit möglichst wenig Wischgeräuschen, zu liegen.

Im Rahmen einer Ausführungsform umfasst der Wischgummigrundkörper Ethylen-Propylen-Dien-Kautschuk (EPDM). Gegebenenfalls kann der Wischgummigrundkörper aus Ethylen-Propylen-Dien-Kautschuk ausgebildet sein.

Im Rahmen einer weiteren Ausführungsform umfasst der Wischgummigrundkörper jedoch weiterhin mindestens ein weiteres Polymer. Zum Beispiel kann der Wischgummigrundkörper weiterhin Ethylen-Vinylacetat-Copolymer (EVA) und/oder Naturkautschuk (NR) umfassen.

Zum Beispiel kann der Wischgummigrundkörper aus Ethylen-Propylen-Dien-Kautschuk (EPDM) oder aus Ethylen-Propylen-Dien-Kautschuk und Ethylen-Vinylacetat-Copolymer (EPDM/EVA) oder aus Ethylen-Propylen-Dien-Kautschuk und Naturkautschuk (EPDM/NR) ausgebildet sein.

Die Partikel können insbesondere zur Reibungsreduzierung ausgelegt sein und/oder als reibungsreduzierende Partikel bezeichnet werden.

Im Rahmen einer weiteren Ausführungsform umfassen die Partikel Graphitpartikel und/oder Kunststoffpartikel, beispielsweise aus Polyethylen (PE), zum Beispiel Polyethylen mit einer hohen Dichte (HD-PE) und/oder Polyethylen mit einem ultrahohen Molekulargewicht (UHMW-PE), und/oder Polytetrafluorethylen (PTFE), zum Beispiel mikro-PTFE.

Im Rahmen einer weiteren Ausführungsform sind die Partikel aus Graphit und/oder Polyethylen (PE), zum Beispiel Polyethylen mit einer hohen Dichte (HD-PE) und/oder Polyethylen mit einem ultrahohen Molekulargewicht (UHMW-PE), und/oder Polytetrafluorethylen (PTFE), zum Beispiel mikro-PTFE, ausgebildet. Im Rahmen einer weiteren Ausführungsform umfasst die Beschichtung weiterhin mindestens einen Binder. Beispielsweise kann der mindestens eine Binder Polyurethan und/oder Polyimid umfassen oder sein.

Im Rahmen der Erfindung ist die Beschichtung eine strukturierte Beschichtung, insbesondere aus Kunststoffpartikeln, zum Beispiel aus Polyethylen, beispielsweise aus Polyethylen mit einer hohen Dichte (HD-PE) und/oder Polyethylen mit einem ultrahohen Molekulargewicht (UHMW-PE), und/oder aus Polytetrafluorethylen, beispielsweise aus mikro-PTFE. Dabei kann die strukturierte Beschichtung, insbesondere aus Kunststoffpartikeln, insbesondere eine offene Beschichtung sein.

Eine strukturierte Beschichtung aus Kunststoffpartikeln kann beispielsweise auch als Kunstoffpulver-Beschichtung (PPC; Englisch: Plastic Powder Coating) bezeichnet werden.

Eine strukturierte Beschichtung aus Kunststoffpartikeln kann zum Beispiel dadurch ausgebildet werden, dass die Kunststoffpartikel auf den Wischgummigrundkörper, zum Beispiel in Form eines Pulvers, aufgebracht und - beispielsweise mittels Vulkanisation - daran angebunden werden.

Im Rahmen der Erfindung umfasst die Beschichtung eine Graphitbeschichtung. Beispielsweise kann die Graphitbeschichtung Graphitpartikel und mindestens einen Binder umfassen oder daraus ausgebildet sein. Dabei kann die Graphitbeschichtung insbesondere eine geschlossene Beschichtung sein.

Im Rahmen der Erfindung umfasst die Beschichtung eine strukturierte Beschichtung, insbesondere aus Kunststoffpartikeln, zum Beispiel aus Polyethylen, beispielsweise aus Polyethylen mit einer hohen Dichte (HD-PE) und/oder Polyethylen mit einem ultrahohen Molekulargewicht (UHMW-PE), und/oder aus Polytetrafluorethylen, beispielsweise aus mikro-PTFE, und eine Graphitbeschichtung. Dabei ist die Graphitbeschichtung, beispielsweise nachträglich, auf die strukturierte Beschichtung aus Kunststoffpartikeln aufgebracht. Dabei sind zwischen den Kunststoffpartikeln der strukturierten Beschichtung liegende Oberflächeabschnitte des Wischgummigrundkörpers mit der Graphitbeschichtung versehen und können Zwischenräume zwischen den Kunststoffpartikeln der strukturierten Beschichtung mit der Graphitbeschichtung gefüllt sein. Die Graphitbeschichtung kann dabei beispielsweise auf der gleichen Schichtdickenhöhe wie die strukturierte Beschichtung, insbesondere wie deren Kunststoffpartikel, abschließen. Die Beschichtung, welche eine strukturierte Beschichtung und eine Graphitbeschichtung umfasst, kann insbesondere eine geschlossene Beschichtung sein.

Im Rahmen einer Ausgestaltung hiervon können die Kunststoffpartikel der strukturierten Beschichtung < 20 Gew.-% der Beschichtung aus der strukturierten Beschichtung und der Graphitbeschichtung ausmachen. Im Rahmen einer anderen Ausgestaltung hiervon können die Kunststoffpartikel der strukturierten Beschichtung ≥ 20 Gew.-% der Beschichtung aus der strukturierten Beschichtung und der Graphitbeschichtung ausmachen.

Hinsichtlich weiterer technischer Merkmale und Vorteile des erfindungsgemäßen Wischgummis wird hiermit explizit auf die Erläuterungen im Zusammenhang mit dem erfindungsgemäßen Wischblatt sowie auf die Figur und die Figurenbeschreibung verwiesen.

Ein weiterer Gegenstand der Erfindung ist ein Wischblatt für einen Scheibenwischer, insbesondere eines Fahrzeugs, beispielsweise eines Kraftfahrzeugs, welches ein erfindungsgemäßes Wischgummi umfasst beziehungsweise damit ausgestattet ist.

Hinsichtlich weiterer technischer Merkmale und Vorteile des erfindungsgemäßen Wischblatts wird hiermit explizit auf die Erläuterungen im Zusammenhang mit dem erfindungsgemäßen Wischgummi sowie auf die Figur und die Figurenbeschreibung verwiesen.

### Zeichnungen und Ausführungsbeispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine Ausführungsform eines erfindungsgemäßen Wischgummis für ein Wischblatt eines Scheibenwischers mit einer offenen, strukturierten Beschichtung aus Kunststoffpartikeln,
- Fig. 2: einen schematischen Querschnitt durch eine weitere Ausführungsform eines erfindungsgemäßen Wischgummis für ein Wischblatt eines Scheibenwischers mit einer geschlossenen Graphitbeschichtung aus Graphitpartikeln und mindestes einem Binder; und
- Fig. 3: einen schematischen Querschnitt durch eine weitere Ausführungsform eines erfindungsgemäßen Wischgummis für ein Wischblatt eines Scheibenwischers mit einer geschlossenen Beschichtung, welche durch eine strukturierte Beschichtung aus Kunststoffpartikeln und eine zwischen den Kunststoffpartikeln der strukturierten Beschichtung ausgebildete Graphitbeschichtung aus Graphitpartikeln und mindestes einem Binder ausgebildet ist.

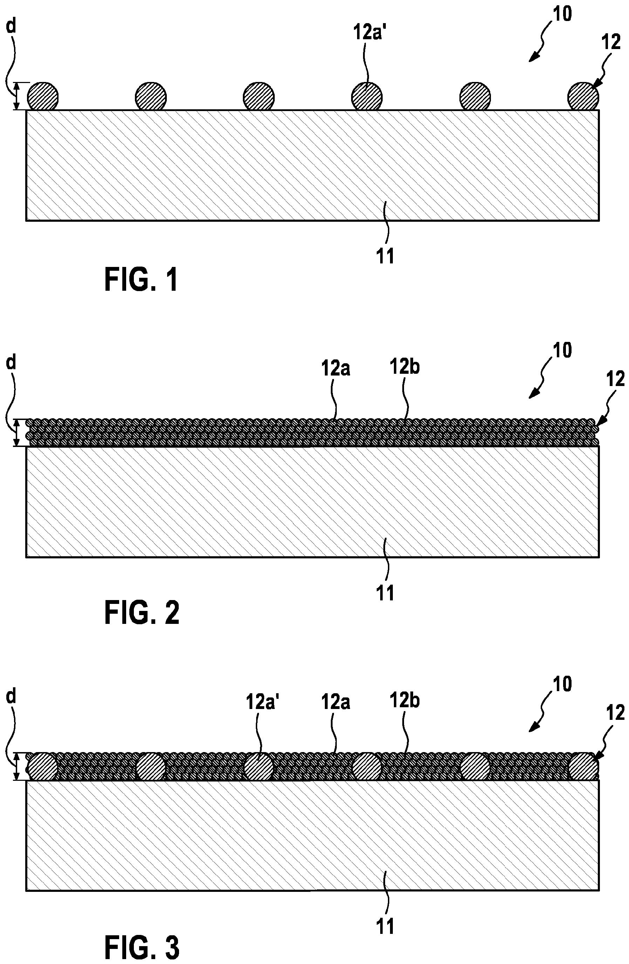

Die Figuren 1 bis 3 zeigen, dass das Wischgummi 10 einen Wischgummigrundkörper 11 aufweist, welcher 11 mit unterschiedlichen reibungsreduzierende Partikel 12a',12a umfassenden Beschichtungen 12 beschichtet ist.

Die Figuren 1 bis 3 zeigen, dass die Beschichtungen 12 dabei eine bestimmte durchschnittliche Schichtdicke d aufweisen. Die im folgenden erläuterten umfangreichen experimentellen Untersuchungen haben gezeigt, dass für eine optimale Funktion des Wischgummis, insbesondere im Hinblick auf eine gute anfängliche Wischqualität in Kombination mit möglichst wenig Wischgeräuschen, wie Quietschen, Schmatzen und/oder Brummen beim Wischvorgang, eine durchschnittliche Schichtdicke der Beschichtung 12 in einem Bereich von > 2 µm bis < 10 µm maßgeblich ist.

Der Wischgummigrundkörper 11 kann beispielsweise Ethylen-Propylen-Dien-Kautschuk umfassen. Zum Beispiel kann der Wischgummigrundkörper aus Ethylen-Propylen-Dien-Kautschuk oder aus Ethylen-Propylen-Dien-Kautschuk und Ethylen-Vinylacetat-Copolymer oder aus Ethylen-Propylen-Dien-Kautschuk und Naturkautschuk ausgebildet sein.

Im Rahmen der in Figur 1 gezeigten Ausführungsform ist der Wischgummigrundkörper 11 mit einer offenen, strukturierten Beschichtung 12 aus Kunststoffpartikeln 12a', beispielsweise aus Polyethylen und/oder Polytetrafluorethylen, beschichtet.

Im Rahmen der in Figur 2 gezeigten Ausführungsform ist der Wischgummigrundkörper 11 mit einer geschlossenen Graphitbeschichtung 12 aus Graphitpartikeln 12a und mindestens einem Binder 12b, beispielsweise Polyurethan und/oder Polyimid, beschichtet.

Im Rahmen der in Figur 3 gezeigten Ausführungsform ist der Wischgummigrundkörper 11 mit einer geschlossenen Beschichtung 12 beschichtet, welche eine strukturierte Beschichtung 12 aus Kunststoffpartikeln 12a', beispielsweise aus Polyethylen und/oder Polytetrafluorethylen, und eine zwischen den Kunststoffpartikeln 12a' ausgebildete Graphitbeschichtung aus Graphitpartikeln 12a und mindestens einem Binder 12b, beispielsweise Polyurethan und/oder Polyimid, umfasst.

### Ausführungsbeispiele

Wischgummigrundkörper aus reinem Ethylen-Propylen-Dien-Kautschuk wurden serienweise mit unterschiedlichen Beschichtungen auf der Basis von unterschiedlichen Partikeln, nämlich Kunststoffpartikeln und/oder Graphitpartikeln, und beispielsweise auch mit unterschiedlichen Partikelbeladungen, Partikelgrößen und/oder unterschiedlichem Molekulargewicht, beschichtet. Dabei wurde jeweils eine Serie von beschichteten Wischgummigrundkörpern mit einer durchschnittlichen Beschichtungsschichtdicke von > 0 µm bis ≤ 2 µm, von > 2 µm bis < 10 µm und von ≥ 10 µm angefertigt und auf deren anfängliche Wischqualität sowie eine Geräuschentwicklung beim Wischvorgang in Form von Quietschen, Schmatzen und Brummen hin untersucht. Die anfängliche Wischqualität wurde mittels einer Punkteskala von maximal 10 Punkten bewertet.

Tabelle 1 zeigt die Testergebnisse einer Wischgummiserie mit Wischgummigrundkörpern aus reinem Ethylen-Propylen-Dien-Kautschuk, welche mit unterschiedlichen offenen, strukturierten Beschichtungen (siehe Fig. 1) auf der Basis unterschiedlicher Kunststoffpartikel, beispielsweise aus Polyethylen und/oder Polytetrafluorethylen und/oder mit unterschiedlichen Partikelgrößen und/oder unterschiedlichem Molekulargewicht, beschichtet wurden.

**Tabelle 1: EPDM-Wischgummigrundkörper mit unterschiedlichen offenen strukturierten Beschichtungen aus Kunststoffpartikeln**

| | anfängliche Wischqualität | Quietschen | Schmatzen | Brummen |
|---|---|---|---|---|
| > 0 µm bis ≤ 2 µm | 10 | 39 % | 16 % | 0 % |
| > 2 µm bis < 10 µm | 9 | 12 % | 11 % | 0 % |
| ≥ 10 µm | 5 | 0 % | 0 % | 50 % |

Tabelle 2 zeigt Testergebnisse einer Wischgummiserie mit Wischgummigrundkörpern aus reinem Ethylen-Propylen-Dien-Kautschuk, welche mit unterschiedlichen geschlossenen Graphitbeschichtungen (siehe Fig. 2) aus Graphitpartikeln unterschiedlicher Partikelbeladung und mindestens einem Binder, insbesondere Polyurethan und/oder Polyimid, beschichtet wurden.

**Tabelle 2: EPDM-Wischgummigrundkörper mit unterschiedlichen geschlossenen Graphitbeschichtungen**

| | anfängliche Wischqualität | Quietschen | Schmatzen | Brummen |
|---|---|---|---|---|
| > 0 µm bis ≤ 2 µm | 10 | 1 % | 3 % | 0 % |
| > 2 µm bis < 10 µm | 10 | 4 % | 3 % | 28 % |
| ≥ 10 µm | 8 | 0 % | 0 % | 20 % |

Tabelle 3 zeigt Testergebnisse einer Wischgummiserie mit Wischgummigrundkörpern aus reinem Ethylen-Propylen-Dien-Kautschuk, welche mit unterschiedlichen geschlossenen Beschichtungen (siehe Fig. 3) beschichtet wurden, welche jeweils eine strukturierte Beschichtung auf der Basis unterschiedlicher Kunststoffpartikel, beispielsweise aus Polyethylen und/oder Polytetrafluorethylen und/oder mit unterschiedlichen Partikelgrößen und/oder unterschiedlichem Molekulargewicht, und eine Graphitbeschichtung aus Graphitpartikeln unterschiedlicher Partikelbeladung und mindestens einem Binder, insbesondere Polyurethan und/oder Polyimid, in Zwischenräumen zwischen den Kunststoffpartikeln der strukturierten Beschichtung umfasst und wobei die Kunststoffpartikel < 20 Gew.-% der Beschichtung insgesamt ausmachten.

**Tabelle 3: EPDM-Wischgummigrundkörper mit unterschiedlichen geschlossenen Beschichtungen (siehe Fig. 3), welche jeweils eine strukturierte Beschichtung aus Kunststoffpartikeln und eine zwischen den Kunststoffpartikeln der strukturierten Beschichtung ausgebildete Graphitbeschichtung umfasst, wobei die Kunststoffpartikel < 20 Gew.-% der Beschichtung insgesamt ausmachten.**

| | anfängliche Wischqualität | Quietschen | Schmatzen | Brummen |
|---|---|---|---|---|
| > 0 µm bis ≤ 2 µm | 10 | 66 % | 0 % | 0 % |
| > 2 µm bis < 10 µm | 10 | 33 % | 0 % | 0 % |
| ≥ 10 µm | 9 | 13 % | 0 % | 3 % |

Tabelle 4 zeigt Testergebnisse einer Wischgummiserie mit Wischgummigrundkörpern aus reinem Ethylen-Propylen-Dien-Kautschuk, welche mit unterschiedlichen geschlossenen Beschichtungen (siehe Fig. 3) beschichtet wurden, welche jeweils eine strukturierte Beschichtung auf der Basis unterschiedlicher Kunststoffpartikel, beispielsweise aus Polyethylen und/oder Polytetrafluorethylen und/oder mit unterschiedlichen Partikelgrößen und/oder unterschiedlichem Molekulargewicht, und eine Graphitbeschichtung aus Graphitpartikeln unterschiedlicher Partikelbeladung und mindestens einem Binder, insbesondere Polyurethan und/oder Polyimid, in Zwischenräumen zwischen den Kunststoffpartikeln der strukturierten Beschichtung umfasst und wobei die Kunststoffpartikel ≥ 20 Gew.-% der Beschichtung insgesamt ausmachten.

**Tabelle 4: EPDM-Wischgummigrundkörper mit unterschiedlichen geschlossenen Beschichtungen (siehe Fig. 3), welche jeweils eine strukturierte Beschichtung aus Kunststoffpartikeln und eine zwischen den Kunststoffpartikeln der strukturierten Beschichtung ausgebildete Graphitbeschichtung umfasst, wobei die Kunststoffpartikel ≥ 20 Gew.-% der Beschichtung insgesamt ausmachten**

| | anfängliche Wischqualität | Quietschen | Schmatzen | Brummen |
|---|---|---|---|---|
| > 0 µm bis ≤ 2 µm | 8 | 72 % | 0 % | 0 % |
| > 2 µm bis < 10 µm | 8 | 84 % | 0 % | 0 % |
| ≥ 10 µm | 4 | 42 % | 0 % | 0 % |

Aus den Tabellen 1 bis 4 ist bereits ersichtlich, dass sich eine durchschnittliche Beschichtungsschichtdicke von ≥ 10 µm - unabhängig von der Zusammensetzung der Beschichtung - nachteilig auf die anfängliche Wischqualität auswirkt. Zudem kann hierbei insbesondere eine Geräuschentwicklung beim Wischvorgang in Form von Brummen auftreten.

Auch ist aus den Tabellen 1 bis 4 bereits ersichtlich, dass sich eine durchschnittliche Beschichtungsschichtdicke von > 0 µm bis ≤ 2 µm - unabhängig von der Zusammensetzung der Beschichtung - nachteilig auf eine Geräuschentwicklung beim Wischvorgang in Form von insbesondere Quietschen und gegebenenfalls auch in Form von Schmatzen auswirken kann.

Diese Effekte sind - wie Tabelle 5 zeigt - auch durch Bildung jeweils des Durchschnitts der Testergebnisse der in den Tabellen 1 bis 4 gezeigten Wischgummiserien nach Beschichtungsdickenbereich ersichtlich.

**Tabelle 5: Durchschnitt der Testergebnisse der in den Tabellen 1 bis 4 gezeigten Wischgummiserien nach Beschichtungsdickenbereich**

| | anfängliche Wischqualität | Quietschen | Schmatzen | Brummen |
|---|---|---|---|---|
| > 0 µm bis ≤ 2 µm | 9,5 | 45 % | 5 % | 0 % |
| > 2 µm bis < 10 µm | 9,3 | 33 % | 4 % | 7 % |
| ≥ 10 µm | 6,5 | 14 % | 0 % | 18 % |

Die Tabellen 1 bis 5 zeigen, dass eine gute anfängliche Wischqualität in Kombination mit möglichst wenig Wischgeräuschen, wie Quietschen, Schmatzen und/oder Brummen beim Wischvorgang, durch eine Beschichtung mit einer durchschnittlichen Schichtdicke in einem Bereich von> 2 µm bis < 10 µm erzielt werden kann.

## Patentansprüche

1. Wischgummi (10) für ein Wischblatt eines Scheibenwischers, umfassend einen Wischgummigrundkörper (11), wobei der Wischgummigrundkörper (11) mit einer Beschichtung (12) beschichtet ist, wobei die Beschichtung (12) Partikel (12a,12a'), insbesondere zur Reibungsreduzierung, umfasst, wobei die Beschichtung (12) eine durchschnittliche Schichtdicke (d) in einem Bereich von > 2 µm bis < 10 µm aufweist, **dadurch gekennzeichnet, dass** die Beschichtung (12) eine strukturierte Beschichtung aus Kunststoffpartikeln (12a') und eine Graphitbeschichtung (12a, 12b) umfasst und dass zwischen den Kunststoffpartikeln der strukturierten Beschichtung liegende Oberflächenabschnitte des Wischgummigrundkörpers mit der Graphitbeschichtung versehen sind.

2. Wischgummi nach Anspruch 1, wobei der Wischgummigrundkörper (11) Ethylen-Propylen-Dien-Kautschuk umfasst.

3. Wischgummi nach Anspruch 1 oder 2, wobei der Wischgummigrundkörper (11) weiterhin mindestens ein weiteres Polymer, insbesondere Ethylen-Vinylacetat-Copolymer und/oder Naturkautschuk, umfasst.

4. Wischgummi nach einem der Ansprüche 1 bis 3, wobei die Partikel (12a,12a') Graphitpartikel und/oder Kunststoffpartikel umfassen oder sind.

5. Wischgummi nach einem der Ansprüche 1 bis 4, wobei die Partikel (12a,12a') aus Graphit und/oder Polyethylen und/oder Polytetrafluorethylen ausgebildet sind.

6. Wischgummi nach einem der Ansprüche 1 bis 5, wobei die Beschichtung (12) weiterhin mindestens einen Binder (12b) umfasst.

7. Wischgummi nach Anspruch 6, wobei der mindestens eine Binder (12b) Polyurethan und/oder Polyimid umfasst.

8. Wischgummi nach einem der Ansprüche 1 bis 7, wobei die Beschichtung (12) eine Graphitbeschichtung umfasst.

9. Wischgummi nach Anspruch 8, wobei die Graphitbeschichtung Graphitpartikel (12a) und mindestens einen Binder (12b) umfasst.

10. Wischgummi nach Anspruch 1, wobei Zwischenräume zwischen den Kunststoffpartikeln (12a') der strukturierten Beschichtung mit der Graphitbeschichtung (12a, 12b) gefüllt sind.

11. Wischgummi nach einem der Ansprüche 1 bis 10, wobei die Beschichtung (12) eine geschlossene Beschichtung ist.

12. Wischblatt für einen Scheibenwischer, umfassend ein Wischgummi nach einem der Ansprüche 1 bis 11.

## Claims

1. Wiper rubber (10) for a wiper blade of a windscreen wiper, comprising a wiper rubber base element (11), the wiper rubber base element (11) being coated with a coating (12), the coating (12) comprising particles (12, 12a'), more particularly for reducing friction, and the coating (12) having an average layer thickness (d) in a range from > 2 µm to < 10 µm, **characterized in that** the coating (12) comprises a structured coating, composed of plastics particles (12a'), and a graphite coating (12a, 12b) and **in that** surface portions of the wiper rubber base element that lie between the plastics particles of the structured coating bear the graphite coating.

2. Wiper rubber according to Claim 1, wherein the wiper rubber base element (11) comprises ethylene-propylene-diene rubber.

3. Wiper rubber according to Claim 1 or 2, wherein the wiper rubber base element (11) further comprises at least one further polymer, more particularly ethylene-vinyl acetate copolymer and/or natural rubber.

4. Wiper rubber according to any of Claims 1 to 3, wherein the particles (12a, 12a') are or comprise graphite particles and/or plastics particles.

5. Wiper rubber according to any of Claims 1 to 4, wherein the particles (12a, 12a') are formed of graphite and/or polyethylene and/or polytetrafluorethylene.

6. Wiper rubber according to any of Claims 1 to 5, wherein the coating (12) further comprises at least one binder (12b).

7. Wiper rubber according to Claim 6, wherein the at least one binder (12b) comprises polyurethane and/or polyimide.

8. Wiper rubber according to any of Claims 1 to 7, wherein the coating (12) comprises a graphite coating.

9. Wiper rubber according to Claim 8, wherein the graphite coating comprises graphite particles (12a) and at least one binder (12b).

10. Wiper rubber according to Claim 1, wherein interstices between the plastics particles (12a') of the structured coating are filled with the graphite coating (12a, 12b).

11. Wiper rubber according to any of Claims 1 to 10, wherein the coating (12) is a continuous coating.

12. Wiper blade for a windscreen wiper, comprising a wiper rubber according to any of Claims 1 to 11.

## Revendications

1. Lame en caoutchouc (10) pour un balai d'essuie-glace d'un essuie-glace, comprenant un corps de base de lame en caoutchouc (11), le corps de base de lame en caoutchouc (11) étant revêtu par un revêtement (12), le revêtement (12) comprenant des particules (12a, 12a'), en particulier pour la réduction des frottements, le revêtement (12) présentant une épaisseur de couche moyenne (d) dans une plage de > 2 µm à < 10 µm, **caractérisée en ce que** le revêtement (12) comprend un revêtement structuré composé de particules de matière synthétique (12a') et un revêtement de graphite (12a, 12b) et **en ce que** des portions de surface du corps de base de lame en caoutchouc se situant entre les particules de matière synthétique du revêtement structuré sont pourvues du revêtement de graphite.

2. Lame en caoutchouc selon la revendication 1, le corps de base de lame en caoutchouc (11) comprenant un caoutchouc d'éthylène-propylène-diène.

3. Lame en caoutchouc selon la revendication 1 ou 2, le corps de base de lame en caoutchouc (11) comprenant en outre au moins un autre polymère, en particulier un copolymère d'éthylène-acétate de vinyle et/ou un caoutchouc naturel.

4. Lame en caoutchouc selon l'une quelconque des revendications 1 à 3, les particules (12a, 12a') comprenant ou étant des particules de graphite et/ou des particules de matière synthétique.

5. Lame en caoutchouc selon l'une quelconque des revendications 1 à 4, les particules (12a, 12a') étant formées de graphite et/ou de polyéthylène et/ou de polytétrafluoroéthylène.

6. Lame en caoutchouc selon l'une quelconque des revendications 1 à 5, le revêtement (12) comprenant en outre au moins un liant (12b).

7. Lame en caoutchouc selon la revendication 6, l'au moins un liant (12b) comprenant du polyuréthane et/ou du polyimide.

8. Lame en caoutchouc selon l'une quelconque des revendications 1 à 7, le revêtement (12) comprenant un revêtement de graphite.

9. Lame en caoutchouc selon la revendication 8, le revêtement de graphite comprenant des particules de graphite (12a) et au moins un liant (12b).

10. Lame en caoutchouc selon la revendication 1, des espaces intermédiaires entre les particules de matière synthétique (12a') du revêtement structuré étant remplis avec le revêtement de graphite (12a, 12b) .

11. Lame en caoutchouc selon l'une quelconque des revendications 1 à 10, le revêtement (12) étant un revêtement fermé.

12. Balai d'essuie-glace pour un essuie-glace, comprenant une lame en caoutchouc selon l'une quelconque des revendication 1 à 11.
